# EUROPEAN PATENT SPECIFICATION

(11) **EP 2 596 964 B1**
(45) Date of publication and mention of the grant of the patent: **25.10.2017**
(21) Application number: 12193788.2
(22) Date of filing: 22.11.2012
(51) Int. Cl.: B60C 11/00

(54) **Stiffness enhanced tread**
Lauffläche mit verbesserter Steifheit
Bande de roulement à rigidité améliorée

(30) Priority: 22.11.2011 US 201113302485
(43) Date of publication of application: 29.05.2013
(73) Proprietor: The Goodyear Tire & Rubber Company, Akron, OH 44316-0001 (US)
(72) Inventor: Oblizajek, Kenneth Lee, Troy, MI 48085 (US); Goldstein, Arthur Allen, Mayfield Village, OH 44143 (US); Darab, Jonathan Michael, West Bloomfield, MI 48323 (US); Sandstrom, Paul Harry, Cuyahoga Falls, OH 44223 (US); Rodgers, William Ronald, Bloomfield Township, MI 48301 (US); Ryba, Jennifer Lyn, Wadsworth, OH 44281 (US); Graves, Rachel Tamar, Stow, OH 44225 (US); Melvin, Chad Edward, Akron, OH 44312 (US)
(74) Representative: Kutsch, Bernd

(56) References cited:
- EP-A2- 0 787 604
- EP-A2- 0 878 330
- EP-A2- 0 881 060
- JP-A- 11 139 107
- JP-A- 2005 255 048

## Description

### Field of Invention

This invention relates to a tire and to a method of making a tire and more specifically to a method and a tire such as a pneumatic tire having a tread with plugs of a relatively high stiffness material extending through a relatively lower stiffness tread material.

### Description of the Related Art

It is known to those of skill in the art that the overall performance of a pneumatic tire's tread pattern (including performance criteria such as wet handling, dry handling and stopping) may be influenced by the stiffness characteristics of the tread elements. Certain tire response properties improve while others degrade with conventional practices for increasing stiffness. Examples of present-day methods for increasing the stiffness of a tread element include using relatively stiffer tread base and cap materials. Although these methods are advantageous for certain tire responses, mechanical actions and performance characteristics, they typically have the disadvantage, however, of compromising other tread actions and performance criteria. Certain advantages, furthermore, derive from exploiting stiffness properties in desired directions, such as significantly stiffening the tread in one direction, while achieving relatively low stiffness in directions other than the desired stiffening direction. Previously, these directional stiffening methods were primarily implemented by tread block design features; examples include the insertion of voids and sipes, tapered or chamfered block edges, and reinforced tread block buttressing.

It is also known to provide a tire tread having sectors formed with a first material having a first modulus of elasticity and other sectors formed with a second material having a second modulus of elasticity. What is needed, however, is a method of significantly and effectively increasing the directional stiffness characteristics of portions of a tire tread.

JP-A-2005-255048 describes a tire in accordance with the preamble of claim 1.

### Summary of the Invention

The invention relates to a tire in accordance with claim 1 and to a method in accordance with claim 15.

Dependent claims refer to preferred embodiments of the invention.

A tire or pneumatic tire in accordance with the present invention may include a tread base comprised of a first material, a tread cap comprised of a second material, and a plurality of plugs comprised of a third and/or more materials. The tread cap is disposed radially outward of the tread base and in operational contact with a ground surface. The plurality of plugs are disposed at least partially within at least one of the tread base and the tread cap. The plurality of plugs yield a tread stiffness in a first direction greater than the stiffness in at least one other direction.

According to a preferred aspect of the present invention, the first direction is radial and the other direction is one of circumferential and lateral.

According to another preferred aspect of the present invention, the plurality of plugs form at least one circumferential ring disposed in a shoulder portion of the tread. Additionally, the plurality of plugs may be disposed in another area(s) of the tread. For example, the plurality of plugs may form several rings in each circumferential area of the tread, such as each tread block.

According to still another preferred aspect of the present invention, the third material has a substantially higher modulus of elasticity than the second material.

According to yet another preferred aspect of the present invention, the third material has a substantially higher modulus of elasticity than the first material.

According to yet another preferred aspect of the present invention, the third material has a substantially lower hysteresis than the second material.

According to yet another preferred aspect of the present invention, the third material has a substantially lower hysteresis than the first material.

According to still another preferred aspect of the present invention, the third material is a metal, such as steel, stainless steel, brass, bronze, galvanized steel, copper, or any other suitable metal.

According to yet another preferred aspect of the present invention, the third material is nylon.

The third material is a polymer selected from polyamides, poly ether-ether ketones, polyimides, polybutylene terephalates, polyethylene terephalates, poly(phenylene sulfide), and liquid crystal polymers. The third material may be a thermoplastic polymer with added inorganic fillers such as, for example, carbon fiber, glass fiber, glass flake, talc, mica, silica, glass beads, and calcium carbonate. Furthermore, the third material may be selected from syndiotactic polybutadiene polymer, epoxy polymer, crosslinked urethane polymer, and unsaturated polyester (e.g., bulk molding compound). The third material may be a thermosetting polymer or composite with added inorganic fillers such as, for example, carbon fiber, glass fiber, glass flake, talc, mica, silica, glass beads, and calcium carbonate.

According to a preferred aspect of the present invention, the third material is a syndiotactic polybutadiene polymer.

According to still another preferred aspect of the present invention, the plurality of plugs are temporarily secured to a green tire such that the tread cap, the tread base, and the plurality of plugs are cured simultaneously.

According to yet another preferred aspect of the present invention, the plurality of plugs are finally secured to the tread cap and tread base by the simultaneous curing.

According to still another preferred aspect of the present invention, the plurality of plugs are inserted into the tread cap subsequent to the tread cap and tread base being cured.

According to yet another preferred aspect of the present invention, an adhesive further secures the plurality of plugs to the tread cap.

According to still another preferred aspect of the present invention, the adhesive further secures the plurality of plugs to the tread base.

According to yet another preferred aspect of the present invention, the third material has a dynamic storage modulus of between 1 MPa and 200000 MPa.

According to still another preferred aspect of the present invention, the third material has a dynamic storage modulus of between 1 MPa and 20000 MPa.

According to yet another preferred aspect of the present invention, the third material has a dynamic storage modulus of between 1 MPa and 1000 MPa.

According to still another preferred aspect of the present invention, the third material has a dynamic storage modulus of between 1 MPa and 8 MPa.

According to yet another preferred aspect of the present invention, the third material has a dynamic storage modulus of between 1.5 MPa and 5 MPa.

According to still another preferred aspect of the present invention, the second material has a dynamic storage modulus of between 0.25 MPa and 3 MPa.

According to yet another preferred aspect of the present invention, the second material has a dynamic storage modulus of between 0.5 MPa and 2.5 MPa.

According to still another preferred aspect of the present invention, the difference between the dynamic storage moduli of the third material and the second material is greater than 0.5 MPa.

According to yet another preferred aspect of the present invention, the difference between the dynamic storage moduli of the third material and the second material is greater than 1 MPa.

Another tire in accordance with the present invention may include a carcass and a tread having a tread base formed of a first material, a tread cap formed of a second material having a substantially different modulus than the first material, and a plurality of plugs formed of a third material having a substantially different modulus than the first material. The plugs extend from the tread base through the tread cap to a ground contacting surface of the tread.

### Brief Description of the Drawings

The invention may take physical form in certain parts and arrangement of parts, example embodiments of which will be described in detail in this specification and illustrated in the accompanying drawings which form a part hereof and wherein:
FIGURE 1 is a front elevation of an example tire constructed in accordance with the present invention.
FIGURE 2 is a partial cross-section of the example tire of FIGURE 1.
FIGURE 3 is a schematic illustration of the various moduli for an example tread in accordance with the present invention.

### Definitions

"Annular" means formed like a ring.

"Axial" and "axially" are used herein to refer to lines or directions that are parallel to the axis of rotation of the tire.

"Lateral" means an axial direction.

"Radial" and "radially" are used to mean directions radially toward or away from the axis of rotation of the tire.

### Detailed Description of Example Embodiments of the Invention

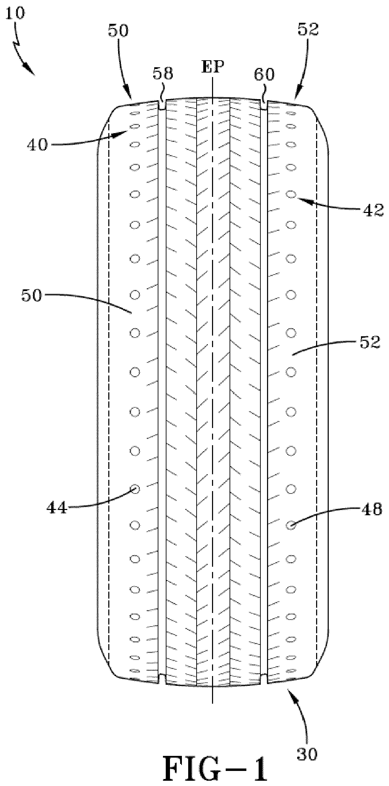

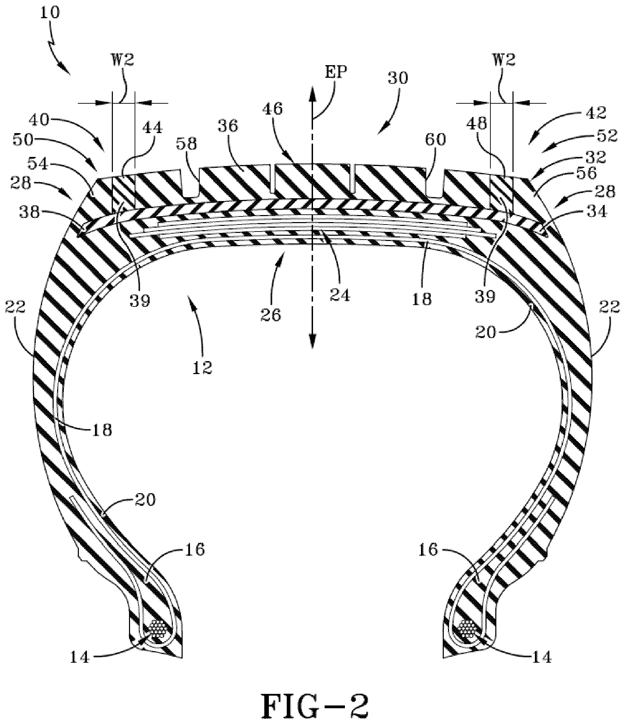

Referring now to the drawings wherein the showings are for purposes of illustrating embodiments of the present invention only and not for purposes of limiting the same, and wherein like reference numerals are understood to refer to like components, FIGURES 1 and 2 show a pneumatic tire 10 having an example tread 30 in accordance with the present invention. The example tread 30 is positioned onto an example carcass 12. The example carcass 12 includes a pair of first and second annular beads 14 and a pair of apexes 16 positioned radially above the first and second annular beads 14. The example carcass 12 includes one or more plies 18 that may extend around the beads 14. The example carcass 12 further defines a crown region 26 and a pair of sidewalls 28. The carcass 12 may include other components, such as an inner liner 20, sidewall rubber portions 22, a belt package 24, and an overlay (not shown).

The example tire tread 30 is shown in its cured and finished state in FIGURES 1 and 2. The tread 30 has a tread cap 32 formed of a first material 36 and a tread base 34 formed of a second material 38. The first material 36 may have a modulus substantially different than the second material 38. The second material 38 may have a substantially higher modulus than the first material 36. Alternatively, the first material 36 and the second material 38 may be the same. The tread 30 may have a first set 40 of plugs 44, or z-plugs, of a third material 39 that extend radially from the tread base 34 through the tread cap 32 to an outer ground contacting surface 46 of the tread. The tread 30 may also have a second set 42 of plugs 48, or z-plugs, of the third material 39 (or alternatively a fourth different material) that extend radially from the tread base 34 through the tread cap 32 to the outer ground contacting surface 46 of the tread. The first set 40 of plugs 44 may be positioned in a first shoulder 50 of the tread 30 and the second set 42 of plugs 48 may be positioned in a second shoulder 52 of the tread.

The stiffness of the shoulders 50, 52 may be adjusted so as to affect several tire performance characteristics. While the plugs 44, 48 are shown positioned within tread elements 54, 56, the plugs may also be positioned at other parts of the tread 30, such as grooves 58, 60 in FIGURES 1 and 2. While the plugs 44, 48 shown define a specific number, the use of any number and/or dimensions of plugs may be used depending upon tire size and desired performance characteristics. The plugs 44, 48 may extend completely between the tread base 34 and the tread surface 46, or only partially.

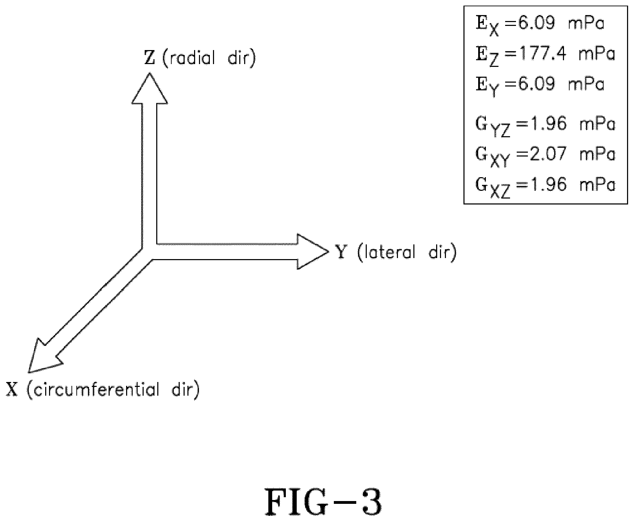

With the plugs 44, 48 of the present invention, the tread 30 may exhibit directionally dependent stiffnesses. As an example (FIGURE 3), the plugs 44, 48 may have a high stiffness in the vertical or Z direction resulting in greatly reduced compressive strains of the tread 30 in the Z direction. Depending on the relative volume loading of the pins (geometry and quantity of pins per unit volume of tread rubber), the tread 30, furthermore, may have a relatively reduced stiffness in the circumferential or X direction and the lateral or Y direction (vs that of the vertical or Z direction). This high stiffness in the Z direction of the plugs 44, 48 or combination of effects of the plugs and the other structures of the tire 10 may thus result in significantly reduced rolling resistance (RR) of the tire 10 without significantly diminishing other tire performance criteria. Pre-cured plugs 44, 48 may be temporarily secured to a green tire and cured simultaneously with the other structures of the tire 10. Alternatively, cured plugs 44, 48 may be secured to the tread cap 32 and/or tread base 34 subsequent to the curing of the other structures of the tire 10.

Cyclic tread compressive strains may be significantly reduced by using a material/configuration with increased modulus in the thickness or Z direction. This results in reduced RR, attributable to the Z directed load-bearing actions without significantly increasing the stresses in the X and Y directions. Managing the simultaneous cyclic stress and strain cycles for reduced RR from all of these mechanisms may thus require a relatively high stiffness in the Z direction with a relatively low stiffness in the X and/or Y directions.

One method of obtaining these desired directional stiffness characteristics is to use a combination of materials within the tread. The Z directed stiffening may be achieved with relatively high modulus material 39 embedded within a relatively low modulus rubber matrix 36 with a unique geometry. For example, in accordance with the present invention, plugs 44, 48, of high modulus material 39 with appropriate spacing throughout the tread 30 and extending substantially in the Z direction may resist Z directed stresses, while the surrounding tread cap material 36 interconnecting the plugs 44, 48 may provide relatively low stiffness properties in the X and Y directions.

Various configurations of the tread cap/tread base/plug combination of materials 36, 38, 39 may be implemented. Also, various orientations of the relatively high modulus plugs 44, 48 may be implemented. For example, if oriented at 45 degrees relative to the X direction (not shown), increased shear stiffness of the tread 30 may result. This may be desirable for improving cornering, braking/driving traction, etc. Calculations indicate that RR may be reduced by over 30% by Z directed plugs (FIGURES 1 and 2). Placement and number of the plugs may be at any location of the tread, both circumferentially and laterally, with any design and dimensions. Additionally, example materials 39 for the plugs 44, 48 may be a suitable metal, polymer, and/or plastic with a melting point above 150 degrees Celsius.

Further, the tread cap 36 and tread base 38 may be integrally formed of the same material as a single structure (not shown), or the tread base may be omitted. The tread cap structure may then be located directly and radially adjacent the belt package 24 or overlay.

Rubber-like materials 39 for the plugs 44, 48 are tested by a Rubber Process Analyzer, or "RPA," such as RPA 2000™ instrument by Alpha Technologies, formerly Flexsys Company and formerly Monsanto Company. References to an RPA 2000 instrument may be found in the following publications: H. A. Palowski, et al, Rubber World, June 1992 & January 1997, as well as Rubber & Plastics News, April 26, 1993 & May 10, 1993. The RPA test results are reported from data obtained at 100 degrees C in a dynamic shear mode at a frequency of 11 Hertz and at 10% dynamic strain values.

The X-Y cross-section of example plugs 44, 48 may be a circle, square, triangle, pentagon, hexagon, heptagon, octagon, nonagon, pentagon, or other suitable shape. The X-Y cross-section of example plugs 44, 48 may also vary as the plugs extend in the Z direction (e.g., a plug which narrows as it extends radially away from the wheel may be more securely attached to the tread than a plug that does not vary). An example cylindrical plug in accordance with the present invention may have a diameter W2 between 0.5 mm and 60 mm and a radial or Z length between 3 mm and 80 mm depending upon the tread size and configuration. Another example cylindrical plug may have a diameter of 2 mm and be spaced apart between 1 mm and 2 mm.

The harder plug material 39 may have a dynamic storage modulus between 1 MPa and 200,000 MPa, or between 1 MPa and 8 MPa, or between 1.5 MPa and 5 MPa. The softer tread cap material 32 may have a dynamic storage modulus between 0.25 MPa and 3 MPa, or between 0.5 MPa and 2.5 MPa. The difference between the dynamic storage moduli of the plug material 39 and the tread cap material 32 may be greater than 0.5 MPa, or greater than 1 MPa.

"Tan Delta" values determined at 10% strain may be a ratio of dynamic loss modulus to dynamic storage modulus and may be considered a measure of hysteresis wherein a lower hysteresis of a tread material 36, 38, and/or 39 may be desirable for lesser RR. A decrease in the Tan Delta value may correspond to a desirable decrease in hysteresis of the plug material 39. Thus, materials 39 for the plugs 44, 48 may have a low Tan Delta and low hysteresis.

One example material 39 for the plugs 44, 48 may be a syndiotactic polybutadiene polymer ("SPBD"). SPBD differs from other polybutadienes (e.g. differs from cis 1,4-polybutadiene rubber) in that SPBD has a vinyl 1,2-content of at least 80 percent which may vary from 80 percent to at least 96 percent. SPBD may be flexible, but is not generally considered an elastomer. Moreover, SPBD has little or no building tack for adhering to uncured conjugated diene-based rubber compositions, unless SPBD is first blended with one or more elastomers which ordinarily required an addition of a compatibilizer and perhaps a tackifying resin to do so.

Therefore, unwanted movement of plugs 44, 48 of SPBD may occur against an uncured rubber component during a tire building and forming process, unless the plugs 44, 48 are at least partially pre-cured against a green rubber component prior to curing of the green tire. Plugs 44, 48 of SPBD may provide the Z direction stiffness discussed above. Thus, it may be desirable that no elastomer, compatabilizing agent, or tackifying resin be physically blended with the SPBD, unless used in very small amounts thereby not compromising the melting point of the SPBD.

SPBD may be a relatively rigid (limited flexibility) crystalline polymer with poor solubility in elastomers without the addition of a compatibilizer. For the present invention, as indicated above, SPBD may form the plugs 44, 48, thereby providing some flexibility and not being blended with materials 36, 38 of the tread cap 32 and tread base 34, nor a compatibilizer. The melting point (MP) of SPBD may vary with the content of 1,2-microstructure. For example, MP values may range from 120°C at an 80 percent vinyl 1,2-content up to 200°C to 210°C for about a 96 percent vinyl 1,2-content for its microstructure.

For the present invention, SPBD may have a melting point (MP) temperature of at least 150°C, or from 160°C to 220°C, so that the plugs 44, 48 retain a significant degree of dimensional stability and thereby add stiffness and dimensional stability/support to the tread 30 at a relatively high temperature as the tread generates heat when being dynamically worked. Higher MP's may be preferred for the plugs 44, 48. Further, the SPBD may contain a dispersion of one or more reinforcing fillers. In order to make the SPBD plugs 44, 48 integral with the tread cap 32 and/ or tread base 34, the plugs may be co-cured with the sulfur curable tread cap and tread base. For such co-curing of the SPBD plugs 44, 48, the interface between the plugs and the tread cap 32 and/or tread base 34 may rely upon: (A) one or more sulfur curatives contained within the SPBD, (B) one or more sulfur curatives contained within tread cap and/or tread base, or (C) one or more sulfur curatives contained in each of the SPBD and tread cap 32 and/or tread base 34.

SPBD may be made integral with the tread cap 32 and/or tread base 34 by co-curing the SPBD and tread cap and/or tread base together at an elevated temperature in which the SPBD and tread cap and/or tread base may be integrated with each other at the interface between the SPBD and tread cap and/or tread base. Plugs 44, 48 of SPBD may provide dimensional stability (e.g., a degree of rigidity) for the tread 30 by the integrated, co-cured plug/tread cap/tread base interface.

Alternatively, pre-cured plugs 44, 48 of SPBD or other stiff material may be installed in appropriately sized holes in the tread 30 subsequent to the curing of the other parts of the tire 10. An adhesive layer may be applied at the interface between the SPBD and tread cap and/or tread base for securing the plugs 44, 48 in place.

Further, it may not be desirable to blend the SPBD with other elastomers because such blending may dilute or degrade the dimensional stability of the SPBD plugs 44, 48. The terms "rubber" and "elastomer" may be used interchangeably unless otherwise indicated. The terms "rubber composition" and "compound" may be used interchangeably unless otherwise indicated. The term "melting point, or "MP" as used herein may mean the melting temperature of the SPBD measured by conventional differential scanning calorimetry using a 10°C/minute temperature rise. The term "softening point" as used herein may mean the transition temperature from a hard/stiff material to a soft/rubbery material.

As stated above, a tread 30 with plugs 44, 48 in accordance with the present invention produces excellent directional stiffness characteristics in a pneumatic tire 10. The plugs 44, 48 thus enhance the performance of the pneumatic tire 10, even though the complexities of the structure and behavior of the pneumatic tire are such that no complete and satisfactory theory has been propounded.

## Claims

1. A tire comprising a tread base (34) comprising a first material (36) and a tread cap (32) comprising a second material (38), the tread cap (32) being disposed radially outward of at least a part of the tread base (34) and being configured for operationally coming into contact with a ground surface, and a plurality of tread plugs (44, 48) comprising a third material (39), the plurality of tread plugs (44, 48) being disposed at least partially within at least one of the tread base (34) and the tread cap (32), and wherein the plurality of tread plugs (44, 48) yield a tread stiffness in a first direction greater than a tread stiffness in at least one other direction, or the second and third material have a different modulus than the first material, **characterized in that** the third material (39) is syndiotactic polybutadiene polymer, epoxy polymer, crosslinked urethane polymer, unsaturated polyester, polyamide, poly ether-ether ketone, polyimide, polybutylene terephalate, polyethylene terephalate, poly(phenylene sulfide), liquid crystal polymer, or such a third material with added inorganic filler.

2. The tire of claim 1 wherein the plurality of tread plugs (44, 48) extend from the tread base (34) through the tread cap (32) to the ground surface.

3. The tire of claim 1 or 2 wherein the plurality of tread plugs (44, 48) do not extend radially beyond the radially outermost surface of the tread cap (32).

4. The tire of at least one of the previous claims wherein the first direction is the radial direction and the at least one other direction is at least one or both of the circumferential direction and the lateral direction.

5. The tire of at least one of the previous claims wherein the plurality of plugs (44, 48) form or are arranged in at least one circumferential ring (40, 42).

6. The tire of at least one of the previous claims wherein the plurality of plugs (44, 48) are disposed in at least one or in both shoulder portions (50, 52), preferably only in at least one or in both shoulder portions (50, 52), of the tread (30).

7. The tire of at least one of the previous claims wherein the plugs (44, 48) of the plurality of plugs (44, 48) are arranged in a mutually spaced relationship.

8. The tire of at least one of the previous claims wherein the plugs (44, 48) of the plurality of plugs (44, 48) have a round, elliptic, triangular, rectangular, hexagonal or pentagonal shape when viewed in top view onto the tread (30).

9. The tire of at least one of the previous claims wherein one or both of the second and third material has a substantially higher modulus of elasticity, preferably an at least 30% or an at least 50% higher modulus of elasticity, than the first material; and/or wherein the wherein third material has a substantially higher modulus of elasticity, preferably an at least 30% or an at least 50% higher modulus of elasticity, than the second material.

10. The tire of at least one of the previous claims wherein the third material has a substantially lower hysteresis, preferably an at least 30% or an at least 50% lower hysteresis, than the first material, the second material or the first and the second material.

11. The tire of at least one of the previous claims wherein an adhesive secures the plurality of plugs (44, 48) to the tread cap (32), to the tread base (34) or to the tread cap (32) and the tread base (34).

12. The tire of at least one of the previous claims wherein the third material has a dynamic storage modulus of from 1 MPa to 200000 MPa or of from 1.5 MPa to 8 MPa; and/or wherein the second material has a dynamic storage modulus of from 0.25 MPa to 3 MPa or of from 0.5 MPa to 2.5 MPa.

13. The tire of at least one of the previous claims wherein the difference between the dynamic storage moduli of the third material and the second material is greater than 0.5 MPa or greater than 1.0 MPa.

14. The tire of at least one of the previous claims wherein the plurality of plugs (44, 48) are primarily oriented in a first angular direction and in a second angular direction, the second direction being different from the first direction; and, optionally, wherein the first angular direction is directly radial and the second angular direction is of from 20 degrees to 70 degrees relative to the first angular direction.

15. A method of manufacturing a tire in accordance with at least one of the previous claims wherein the plurality of plugs (44, 48) is temporarily or finally secured to a green tire such that the tread cap (32), the tread base (34), and the plurality of plugs (44, 48) are cured simultaneously, or wherein the plurality of plugs (44, 48) are inserted into the tread cap (32) subsequent to the tread cap (32) and tread base (34) being cured.

## Patentansprüche

1. Reifen, aufweisend eine Laufflächenbasis (34), aufweisend einen ersten Werkstoff (36) und eine Laufflächenkappe (32), aufweisend einen zweiten Werkstoff (38), wobei die Laufflächenkappe (32) radial nach außen von mindestens einem Teil der Lauffläche (34) angeordnet ist und konfiguriert ist, mit einer Bodenoberfläche operativ in Berührung zu kommen, und eine Mehrzahl von Laufflächenstopfen (44, 48), die einen dritten Werkstoff (39) aufweisen, wobei die Mehrzahl von Laufflächenstopfen (44, 48) mindestens teilweise innerhalb mindestens einer der Laufflächenbasis (34) und der Laufflächenkappe (32) angeordnet ist, und wobei die Mehrzahl von Laufflächenstopfen (44, 48) eine Laufflächensteifigkeit in einer ersten Richtung ergibt, die größer ist als eine Laufflächensteifigkeit in mindestens einer anderen Richtung, oder wobei der zweite oder der dritte Werkstoff einen unterschiedlichen Modul haben als der erste Werkstoff, **dadurch gekennzeichnet, dass** der dritte Werkstoff (39) syndiotaktisches Polybutadienpolymer, Epoxypolymer, Quervernetztes Urethanpolymer, ungegesättigtes Polyester, Polyamid, Polyether-Etherketon, Polyimid, Poly(butylenterephalat), Poly(ethylenterephalat), Poly(Phenylensulfid), flüssiges Kristalpolymer, oder solch ein dritter Werkstoff mit einem hinzugefügten anorganischen Füllmittel ist.

2. Reifen nach Anspruch 1, wobei sich die Mehrzahl von Laufflächenstopfen (44, 48) von der Laufflächenbasis (34) durch die Laufflächenkappe (32) zur Bodenfläche erstreckt.

3. Reifen nach Anspruch 1 oder 2, wobei sich die Mehrzahl von Laufflächenstopfen (44, 48) radial nicht über die radial äußerste Fläche der Laufflächenkappe (32) hinaus erstreckt.

4. Reifen nach mindestens einem der vorhergehenden Ansprüche, wobei die erste Richtung die radiale Richtung und die mindestens eine andere Richtung mindestens eine oder beide der Umfangsrichtung und der lateralen Richtung ist.

5. Reifen nach einem der vorhergehenden Ansprüche, wobei die Mehrzahl von Stopfen (44, 48) in mindestens einem umlaufenden Ring (40, 42) angeordnet sind oder einen solchen bilden.

6. Reifen nach mindestens einem der vorhergehenden Ansprüche, wobei die Mehrzahl von Stöpseln (44, 48) in mindestens einem oder in beiden Schulterbereichen (50, 52), vorzugsweise nur in mindestens einem oder in beiden Schulterbereichen (50, 52) der Lauffläche (30), angeordnet sind.

7. Reifen nach mindestens einem der vorhergehenden Ansprüche, wobei die Stopfen (44, 48) der Mehrzahl von Stopfen (44, 48) in einer gegenseitig beabstandeten Beziehung angeordnet sind.

8. Reifen nach mindestens einem der vorhergehenden Ansprüche, wobei die Stopfen (44, 48) der Mehrzahl von Stopfen (44, 48) in Draufsicht auf die Lauffläche (30) eine runde, elliptische, dreieckige, rechteckige, sechseckige oder fünfeckige Form haben.

9. Reifen nach mindestens einem der vorhergehenden Ansprüche, wobei einer oder beide der zweiten und dritten Werkstoffe einen wesentlich höheren Elastizitätsmodul, vorzugsweise einen mindestens 30 % oder einen mindestens 50 % höheren Elastizitätsmodul hat als der erste Werkstoff; und/oder wobei der dritte Werkstoff einen wesentlich höheren Elastizitätsmodul, vorzugsweise einen mindestens 30 % oder einen mindestens 50 % höheren Elastizitätsmodul hat als der zweite Werkstoff.

10. Reifen nach mindestens einem der vorhergehenden Ansprüche, wobei der dritte Werkstoff eine wesentlich geringere Hysterese, vorzugsweise eine mindestens 30 % oder eine mindestens 50 % niedrigere Hysterese als der erste Werkstoff, der zweite Werkstoff oder der erste und der zweite Werkstoff hat.

11. Reifen nach einem der vorhergehenden Ansprüche, wobei ein Klebstoff die Mehrzahl von Stopfen (44, 48) an die Laufflächenkappe (32), an die Laufflächenbasis (34) oder an die Laufflächenkappe (32) und die Laufflächenbasis (34) befestigt.

12. Reifen nach mindestens einem der vorhergehenden Ansprüche, wobei der dritte Werkstoff einen dynamischen Speichermodul von 1 MPa bis 200000 MPa oder von 1,5 MPa bis 8 MPa hat; und/oder wobei der zweite Werkstoff einen dynamischen Speichermodul von 0,25 MPa bis 3 MPa oder von 0,5 MPa bis 2,5 MPa hat.

13. Reifen nach mindestens einem der vorhergehenden Ansprüche, wobei die Differenz zwischen den dynamischen Speichermodulen des dritten Werkstoffs und des zweiten Werkstoffs größer als 0,5 MPa oder größer als 1,0 MPa ist.

14. Reifen nach mindestens einem der vorhergehenden Ansprüche, wobei die Mehrzahl von Stopfen (44, 48) primär in einer ersten Winkelrichtung und in einer zweiten Winkelrichtung orientiert ist, wobei sich die zweite Richtung von der ersten Richtung unterscheidet; und wobei gegebenenfalls die erste Winkelrichtung direkt radial ist und die zweite Winkelrichtung von 20 Grad bis 70 Grad relativ zu der ersten Winkelrichtung ist.

15. Verfahren zur Herstellung eines Reifens nach mindestens einem der vorhergehenden Ansprüche, wobei die Mehrzahl von Stopfen (44, 48) vorübergehend oder endgültig so an einem Rohreifen befestigt ist, dass die Laufflächenkappe (32), die Laufflächenbasis (34) und die Mehrzahl von Stopfen (44, 48) gleichzeitig gehärtet werden, oder wobei die Mehrzahl von Stopfen (44, 48) in die Laufflächenkappe (32) eingeführt wird, nachdem die Laufflächenkappe (32) und die Laufflächenbasis (34) gehärtet wurden.

## Revendications

1. Pneumatique comprenant une base de bande de roulement (34) comprenant un premier matériau (36) et une chape de bande de roulement (32) comprenant un deuxième matériau (38), la chape de bande de roulement (32) étant disposée radialement vers l'extérieur d'au moins une partie de la sous-chape de bande de roulement (34) et étant configurée pour venir en contact en service avec la surface du sol et une pluralité d'ergots de bande de roulement (44, 48) comprenant un troisième matériau (39), la pluralité d'ergots de bande de roulement (44, 48) étant disposée au moins en partie dans au moins l'une de la sous-chape de bande de roulement (34) et de la chape de bande de roulement (32), et dans lequel la pluralité d'ergots de bande de roulement (44, 48) donne une rigidité de la bande de roulement dans une première direction qui est supérieure à une rigidité de la bande de roulement dans au moins une autre direction, ou le deuxième et le troisième matériau ont un module différent du premier matériau, **caractérisé en ce que** le troisième matériau (39) est un polymère de polybutadiène syndiotactique, un polymère d'époxyde, un polymère d'uréthane réticulé, un polyester insaturé, un polyamide, une polyétheréther-cétone, un polyimide, du poly(téréphtalate de butylène), du poly(téréphtalate d'éthylène), du poly(sulfure de phénylène), un polymère à cristaux liquides ou un tel troisième matériau avec une charge inorganique ajoutée.

2. Pneumatique selon la revendication 1, dans lequel la pluralité d'ergots de bande de roulement (44, 48) s'étend de la sous-chape de bande de roulement (34) à la surface du sol à travers la chape de bande de roulement (32).

3. Pneumatique selon la revendication 1 ou 2, dans lequel le pluralité d'ergots de bande de roulement (44, 48) ne s'étend pas radialement au-delà de la surface radialement la plus externe de la chape de bande de roulement (32).

4. Pneumatique selon au moins l'une quelconque des revendications précédentes, dans lequel la première direction est la direction radiale et la au moins une autre direction est au moins l'une ou les deux de la direction circonférentielle et de la direction latérale.

5. Pneumatique selon au moins l'une quelconque des revendications précédentes, dans lequel la pluralité d'ergots (44, 48) forme ou est agencée dans au moins une couronne circonférentielle (40, 42).

6. Pneumatique selon au moins l'une quelconque des revendications précédentes, dans lequel la pluralité d'ergots (44, 48) est disposée dans au moins l'une ou les deux parties d'épaulement (50, 52), de préférence uniquement dans au moins l'une ou les deux parties d'épaulement (50, 52) de la bande de roulement (30).

7. Pneumatique selon au moins l'une quelconque des revendications précédentes, dans lequel les ergots (44, 48) de la pluralité d'ergots (44, 48) sont agencés en relation d'espacement mutuel.

8. Pneumatique selon au moins l'une quelconque des revendications précédentes, dans lequel les ergots (44, 48) de la pluralité d'ergots (44, 48) ont une forme ronde, elliptique, triangulaire, rectangulaire, hexagonale ou pentagonale lorsqu'on les observe du dessus de la bande de roulement (30).

9. Pneumatique selon au moins l'une quelconque des revendications précédentes, dans lequel l'un ou les deux du deuxième et du troisième matériau a ou ont un module d'élasticité sensiblement supérieur, de préférence un module d'élasticité au moins 30 % ou au moins 50 % supérieur à celui du premier matériau ; et/ou dans lequel le troisième matériau a un module d'élasticité sensiblement supérieur, de préférence un module d'élasticité au moins 30 % ou au moins 50 % supérieur à celui du deuxième matériau.

10. Pneumatique selon au moins l'une quelconque des revendications précédentes, dans lequel le troisième matériau a un hystérésis sensiblement inférieur, de préférence un hystérésis au moins 30 % ou au moins 50 % inférieur à celui du premier matériau, du deuxième matériau ou du premier et du deuxième matériau.

11. Pneumatique selon au moins l'une quelconque des revendications précédentes, dans lequel un adhésif fixe la pluralité d'ergots (44, 48) à la chape de bande de roulement (32), à la sous-chape de bande de roulement (34) ou à la chape de bande de roulement (32) et à la sous-chape de bande de roulement (34).

12. Pneumatique selon au moins l'une quelconque des revendications précédentes, dans lequel le troisième matériau a un module de stockage dynamique de 1 MPa à 200 000 MPa ou de 1,5 MPa à 8 MPa ; et/dans lequel le deuxième matériau a un module de stockage dynamique de 0,25 MPa à 3 MPA ou de 0,5 MPa à 2,5 MPa.

13. Pneumatique selon au moins l'une quelconque des revendications précédentes, dans lequel la différence entre les modules de stockage dynamiques du troisième matériau et du deuxième matériau est supérieure à 0,5 MPa ou supérieure à 1,0 MPa.

14. Pneumatique selon au moins l'une quelconque des revendications précédentes, dans lequel la pluralité d'ergots (44, 48) est principalement orientée dans une première direction angulaire et dans une seconde direction angulaire, la seconde direction étant différente de la première direction ; et éventuellement dans lequel la première direction angulaire est directement radiale et la seconde direction angulaire est de 20 degrés à 70 degrés par rapport à la première direction angulaire.

15. Procédé de fabrication d'un pneumatique selon au moins l'une quelconque des revendications précédentes, dans lequel la pluralité d'ergots (44, 48) est fixée momentanément ou finalement à un pneumatique vert de sorte que la chape de bande de roulement (32), la sous-chape de bande de roulement (34) et la pluralité d'ergots (44, 48) soient durcies simultanément ou dans lequel la pluralité d'ergots (44, 48) est insérée dans la chape de bande de roulement (32) après durcissement de la chape de bande de roulement (32) et de la sous-chape de bande de roulement (34).
